# EUROPÄISCHE PATENTSCHRIFT

(11) **EP 1 346 265 B1**
(45) Veröffentlichungstag und Bekanntmachung des Hinweises auf die Patenterteilung: **04.05.2005**
(21) Anmeldenummer: 01984834.0
(22) Anmeldetag: 13.12.2001
(51) Int. Cl.: G05B 19/05

(54) **FELDGERÄT FÜR AUTOMATISIERUNGSSYSTEME**
FIELD DEVICE FOR AUTOMATION SYSTEMS
APPAREIL DE TERRAIN POUR SYSTEMES D'AUTOMATISATION

(30) Priorität: 14.12.2000 DE 10063982
(43) Veröffentlichungstag der Anmeldung: 24.09.2003
(73) Patentinhaber: Ifak Institut für Automation und Kommunikation e.V. Magdeburg, 39179 Barleben (DE)
(72) Erfinder: SIMON, René, 39108 Magdeburg (DE)
(74) Vertreter: Pfenning, Meinig & Partner GbR
(86) Internationale Anmeldenummer: PCT/EP2001/014663
(87) Internationale Veröffentlichungsnummer: WO 2002/048809

(56) Entgegenhaltungen:
- DE-U- 29 821 808
- US-A- 5 963 444
- US-A- 6 094 600
- US-A- 6 101 422

## Beschreibung

Die Erfindung betrifft ein Feldgerät für Automatisierungssysteme nach der Gattung des Hauptanspruchs.

In Automatisierungssystemen werden Feldgeräte verwendet, die beispielsweise zur Erfassung von Prozeßgrößen und/oder zur Beeinflussung von Stellgrößen dienen und über eine oder mehrere Schnittstellen mit anderen Feldgeräten oder mit höheren Ebenen des Automatisierungssystems verbunden sind. Im Allgemeinen besteht das Feldgerät aus einer Einrichtung zur internen Datenhaltung, aus einer oder mehreren Kommunikationsschnittstellen (1-n), aus einer oder mehreren Prozeßschnittstellen (1-n), aus (0-n) Mensch/Maschine-Schnittstellen, aus Elementen zur Signalverarbeitung und aus (0-n) persistentem Speicher (0-n), wobei die Schnittstellen, die Elemente der Signalverarbeitung und der persistente Speicher auf Daten der Einrichtung zur internen Datenhaltung zugreifen. Die Klammerausdrucke geben die Anzahl der jeweiligen Elemente an, wobei selbstverständlich andere Bestandteile in einem Feldgerät enthalten sein können, wie Stromversorgung, mechanische Elemente und dergleichen.

Die Einrichtung zur internen Datenhaltung sowie der persistente Speicher enthalten das Prozeßabbild mit Prozeßvariablen, Konfigurationsparameter für die Kommunikation, das bzw. die verwendeten Programme, gespeicherte Festgrößen der beim Prozeßabbild verwendeten Größen oder dergleichen. Die Prozeßschnittstellen erfassen die Meßgrößen bzw. geben die Stellgrößen für den Automatisierungsprozeß aus, die Elemente zur Signalverarbeitung, die beispielsweise als Funktionsbausteine ausgebildet sind, verarbeiten die Meßund/oder Stellgrößen und die Kommunikationsschnittstellen, die für Bussysteme ausgebildet sein können, dienen zur Kommunikation mit anderen Geräten. Die Mensch/Maschine-Schnittstellen werden beispielsweise durch ein lokales Bediendisplay oder eine lokale Eingabeeinheit oder durch Schalter realisiert. Die Einrichtung zur internen Datenhaltung sowie der persistente Speicher werden von einem Mikroprozessorsystem gebildet. Alle datenverarbeitenden Bestandteile des Feldgerätes, d.h. alle Schnittstellen, sowie die Signalverarbeitung arbeiten auf der internen Datenhaltung, d.h. sie lesen und schreiben den dortigen Datenbestand.

Feldgeräte werden in allen Bereichen der Automatisierung, z.B. Prozeßindustrien, wie Chemie, Kraftwerke oder in Fertigungsindustrien, wie Fahrzeugbau, eingesetzt. Es handelt sich beispielsweise um Sensoren (Druck, Temperatur, Füllstand, ...), Aktuatoren (Ventile, Umrichter, Motoren, ...) und weitere.

Als Beispiel für ein einfaches Feldgerät kann ein Sensor zur Messung von Konzentrationen angegeben werden, der einen Schwingquarz, einen Oszillator, ein Mikroprozessorsystem mit Speichern und Zeitgebern und dergleichen, sowie eine serielle Schnittstelle und eine Stromversorgung für alle Elemente umfaßt. Dabei stellt der Schwingquarz die Prozeßschnittstelle dar, er erfaßt Masseanlagerungen durch die Veränderung einer Schwingfrequenz und wandelt sie in ein elektrisches Signal um. Die Signalverarbeitung wird über den Oszillator und das Mikroprozessorsystem durchgeführt, wobei letzteres auch die interne Datenhaltung und den persistenten Speicher sowie gemeinsam mit der seriellen Schnittstelle die Kommunikationsschnittstelle darstellt. Im beschriebenen Beispiel gibt es keine Mensch/Maschine-Schnittstelle. Der Schwingquarz erfaßt die Masseanlagerung und es wird die Konzentration bestimmt, wobei der Konzentrationswert über die serielle Schnittstelle an andere Komponenten des Automatisierungssystems ausgegeben werden kann, oder in dem Konzentrationssensor selbst können Stellgrößen berechnet werden, die über die Schnittstelle an Aktuatoren ausgegeben werden können.

Grundsätzlich werden die Daten und Funktionen von Feldgeräten in Automatisierungssystemen durch andere Feldgeräte oder andere Automatisierungs-Komponenten genutzt, dabei handelt es sich z.B. um Inbetriebnahmewerkzeuge, Werkzeuge für Wartung/Instandhaltung, Leitsysteme, speicherprogrammierbare Steuerungen, andere Feldgerät, ERP-, MES-Systeme und weitere (ERP - Enterprise Resource Planning; MES - Manufacturing Execution System).

Beim Einsatz von Feldgeräten gibt es eine Reihe von Problemen, die im Folgenden beschrieben werden, wobei die Probleme sowohl durch externe Nutzer, d.h. durch andere Komponenten des Automatisierungssystems, als auch durch interne Nutzer. Ein Nutzer greift über die Bestandteile des Feldgerätes auf dessen interne Datenhaltung zu. Interne Nutzer sind die beschriebenen Bestandteile des Feldgerätes. Externe Nutzer sind Automatisierungs-Komponenten bzw. deren Bestandteile oder andere Feldgeräte bzw. deren Bestandteile oder Bestandteile des Prozesses in einem Automatisierungssystem, die über die Kommunikations-, Prozeß- oder Mensch/Maschine-Schnittstellen mit dem Feldgerät verbunden sind. Das Auslösen der Nutzerzugriffe kann durch das Automatisierungssystem selbst, damit umgehende Personen oder den zu automatisierenden Prozeß erfolgen.

Inkonsistenzen durch gleichzeitiges Lesen/Schreiben eines Datums der internen Datenhaltung durch mehrere Nutzer z.B.
mehr als eine Kommunikation (z.B. Ethernet und beliebiger Feldbus),
zyklische und azyklische Kommunikation (z.B. beim PROFIBUS zyklisch über C1- und azyklisch über C2-Verbindung)
lokales Bediendisplay und Kommunikation über die Kommunikationsschnittstelle,
beliebige andere Kombinationen der oben beschriebenen datenverarbeitenden Bestandteile.

Inkonsistenz durch Lesen/Schreiben von logisch zusammengehörigen Daten der internen Datenhaltung durch einen Nutzer in mehreren Schritten (z.B. Meßwert plus Status oder unterer und oberer Grenzwert oder Meßwert und Einheit oder Parametersatz), z.B.
azyklisch in mehreren Telegrammen (z.B. Ethernet, PROFIBUS),
teilweise zyklisch, teilweise azyklisch (z.B. PROFIBUS).

Fehlende Möglichkeit des Herstellens eines definierten ursprünglichen Zustandes beim sequentiellen Ausführen von mehreren Schreib-/Leseoperationen, wenn der Nutzer dies benötigt, z.B.:
Umkonfigurieren,
Downloads (z.B. von Funktionsbausteinen oder aller Parameter des Feldgerätes),
Uploades (z.B. aller Parameter eines oder mehrerer Feldgeräte)
Downloads in mehrere Feldgeräte.

Fehlende Konsistenz der internen Datenhaltung eines Feldgerätes mit
Datenhaltungen anderer Feldgeräte
Datenhaltungen von Automatisierungskomponenten.

Beim Lösen von praktischen Automatisierungsaufgabenstellungen unter Zuhilfenahme von Feldgeräten treten die obigen Probleme in beliebigen Kombinationen auf. Die Lösung der geschilderten Probleme wird deshalb dringender, da Feldgeräte nicht mehr nur isoliert oder kommunikationsmäßig 1:1 verbunden eingesetzt werden, sondern in zunehmendem Maß die Kommunikation mit mehreren Nutzern gestatten. Dazu trägt ebenfalls die zunehmende Einbindung in höhere Ebenen der Automatisierungstechnik bei (z.B. für Asset Management).

Der Erfindung liegt daher die Aufgabe zugrunde, ein Feldgerät für Automatisierungssysteme zu schaffen, mit dem Konflikte bei gleichzeitigem parallelem Zugriff auf die interne Datenhaltung vermieden werden.

Diese Aufgabe wird erfindungsgemäß durch die kennzeichnenden Merkmale des Hauptanspruchs in Verbindung mit den Merkmalen des Oberbegriffs gelöst.

Dadurch, daß in dem Feldgerät zur Steuerung des Zugriffs durch die Mittel zur Erfassung von Prozeßgrößen und/oder zur Ausgabe von Stellgrößen und die Mittel zur Signalverarbeitung und durch die mindestens eine Kommunikationsschnittstelle auf die Daten der Einrichtung zur internen Datenhaltung zwischen den Mitteln sowie der mindestens einen Kommunikationsschnittstelle und der Einrichtung zur internen Datenhaltung eine Transaktions-Manager-Einrichtung vorgesehen ist, die Sperren, Transaktionen und/oder Nutzer verwaltet, können viele Probleme beim Zugriff zu den Daten verhindert werden, insbesondere kann problemlos auf Daten zugegriffen werden, die parallel geändert werden, die nicht freigegeben sind, die inkonsistent sind. Weiterhin wird das Verlieren von Änderungen vermieden und es wird ermöglicht, konsistente Zustände sicherzustellen, bzw. zu diesen zurückzukehren.

Durch die in den Unteransprüchen angegebenen Maßnahmen sind vorteilhafte Weiterbildung und Verbesserungen möglich. Besonders vorteilhaft ist, daß die Transaktions-Manager-Einrichtung eine Transaktions/Dienst-Entität umfaßt, die mindestens ein Transaktions-Protokoll verwendet und zur Verfügung stellt, durch die die Propagierung von Transaktionen mit anderen Transaktionsmanagern ermöglicht und damit verteilte Transaktionen gestattet werden.

Ein Ausführungsbeispiel der Erfindung ist in der Zeichnung dargestellt und wird in der nachfolgenden Beschreibung näher erläutert. Es zeigen:
- Fig. 1: eine schematische Darstellung des Aufbaus eines Feldgerätes,
- Fig. 2: die interne Struktur der Transaktions-Manager-Einrichtung,
- Fig. 3: ein Sequenzdiagramm für das Zusammenspiel eines Nutzers mit der Transaktions-Manager-Einrichtung unter Verwendung der Verwaltung von Sperren,
- Fig. 4: ein Sequenzdiagramm für das Zusammenspiel eines Nutzers mit der Transaktions-Manager-Einrichtung unter Verwendung der Verwaltung von Transaktionen und der Verwaltung von Sperren, und
- Fig. 5: den Aufbau eines Automatisierungssystems mit Feldgerät und Automatisierungskomponenten.

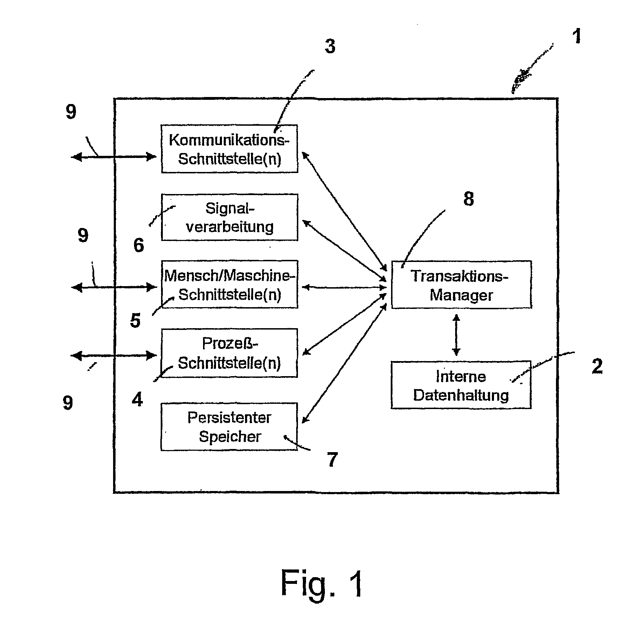

Das in Fig. 1 dargestellte Feldgerät 1 umfaßt, wie schon in Zusammenhang mit dem Stand der Technik beschrieben wurde, eine Einrichtung zur internen Datenhaltung 2, mindestens eine Kommunikationsschnittstelle 3, mindestens eine Prozeßschnittstelle 4, mindestens eine Mensch/Maschine-Schnittstelle 5, Mittel zur Signalverarbeitung 6 und einen persistenten Speicher 7. Zwischen die einzelnen Bestandteile 3 bis 7 und die Einrichtung zur internen Datenhaltung 2 ist eine Transaktions-Manager-Einrichtung 8 geschaltet, die den Datenzugriff der Bestandteile 3 bis 7 zu der internen Datenhaltung 2 steuert.

Auf die Transaktions-Manager-Einrichtung 8 greifen sowohl interne Nutzer, die die Bestandteile 4 bis 7 des Feldgeräts sein können, als auch externe Nutzer zu, die über die angedeuteten Doppelpfeile 9 der Kommunikations-Schnittstelle 3, der Mensch/Maschine-Schnittstelle 5 und der Prozeßschnittstelle 4 kommunizieren können.

Die Transaktions-Manager-Einrichtung 8 weist mehrere Verwaltungsfunktionen auf, die beispielsweise in Tabellenform oder dergleichen in einem Mikroprozessorsystem abgelegt sind. Zu diesen Verwaltungsfunktionen gehören die Verwaltung von Nutzern, die Verwaltung von Sperren und die Verwaltung von Transaktionen. Zu der Verwaltung von Nutzern gehört das Anlegen und Löschen von Nutzern, das Zuordnen von Rechten für die einzelnen Nutzer und das Sichern der Einhaltung der Rechte. Selbstverständlich sind weitere nicht angeführte nutzerspezifische Verwaltungsvorgänge möglich.

Unter die Verwaltung von Sperren fällt beispielsweise das Anfordern und Freigeben von Sperren, das Zuordnen von Sperren zu Daten oder Objekten der internen Datenhaltung, die Definition der Sperren z.B. exklusive Sperren, beispielsweise für das Lesen und Schreiben oder geteilte Sperren, beispielsweise für das Lesen, sowie das Sichern der Einhaltung von Sperren.

Die von der Transaktions-Manager-Einrichtung verwalteten Transaktionen betreffen Transaktionen die auf Sperren basieren, das Initiieren, Abbrechen, d.h. das Verwerfen der Ergebnisse, das Beenden, d.h. das Bestätigen der Ergebnisse, das Zuordnen von Sperren, den Zugriff auf Objekte der internen Datenhaltung, das Sicherstellen von mindestens zwei-phasigen Transaktionen und andere Synchronisationsmechanismen, z.B. dessen Versionierung von Objekten, Zeitstempel. Eine Transaktion sichert die Konsistenz der internen Datenhaltung über eine nicht unterbrechbare Abfolge von Zugriffen auf deren Objekte.

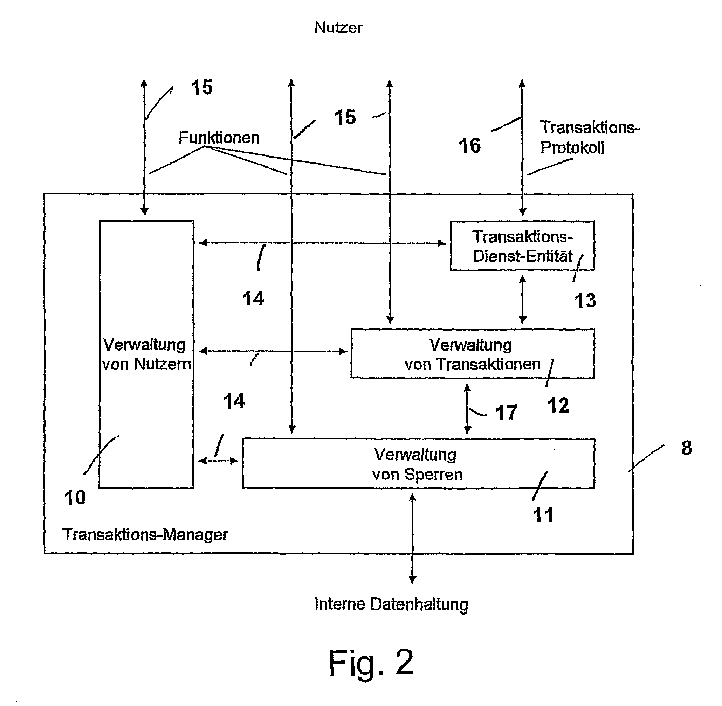

In Fig. 2 ist die interne Struktur der Transaktions-Manager-Einrichtung, die als Mikroprozessorsystem realisiert ist, dargestellt. Die einzelnen Bestandteile bzw. Einheiten des Transaktions-Managers sind die Verwaltung von Nutzern 10, die Verwaltung von Sperren 11, die Verwaltung von Transaktionen 12 und zusätzlich ist eine Transaktions-Dienst-Entität 13 vorgesehen. Die Einheiten Verwaltung von Sperren 11, Verwaltung von Transaktionen 12, Transaktions-Dienst-Entität 13 sind in Schichten übereinander angeordnet und liegen auf der internen Datenhaltung, während die Nutzerverwaltung 10 vertikal angeordnet ist und entsprechend den gestrichelt dargestellten Doppelpfeilen 14 mit den Einheiten 11 bis 13 zusammenarbeitet. Die einzelnen internen Nutzer können auf die oben aufgeführten Funktionen der einzelnen Einheiten 10, 11, 12 direkt zugreifen, was durch die Doppelpfeile 15 angedeutet ist. Intern greifen die Verwaltung von Transaktionen 12, die Verwaltung von Sperren 11, wenn gewünscht und vorgegeben, auf die Verwaltung von Nutzern 10 zurück, um die verschiedenen Funktionen der Verwaltung von Nutzern 10 abzurufen.

Externen Nutzern, die über die über die Kommunikationsschnittstelle(n) 3 zugreifen, werden die Funktionen durch geeignete Dienste/Protokolle zur entsprechenden Verfügung gestellt, die auf die jeweils verwendeten Kommunikationsprotokolle abgebildet werden.

Die Transaktions-Dienst-Entität 13 ist vorgesehen, um die Koordination mit anderen Transaktions-Managern über ein Transaktionsprotokoll zu ermöglichen. Dieses Transaktionsprotokoll, das beispielsweise das Transaction Internet Protocol (TIP) ist, ist in dem Transaktions-Manager 8 bzw. dem Mikroprozessorsystem gespeichert, wobei die Transaktions-Dienst-Entität die entsprechend dem Doppelpfeil 16 ankommenden und abgehenden Daten entsprechend den Regeln des Transaktionsprotokolls umwandelt bzw. abbildet. Das Transaktionsprotokoll wird für die Kommunikation mit anderen Transaktions-Managern auf das oder die verwendeten Kommunikationsprotokolle abgebildet werden. Durch die mögliche Koordination können verteilte Transaktionen realisiert werden und es wird die Propagierung von Transaktionen mit anderen Transaktions-Managern ermöglicht.

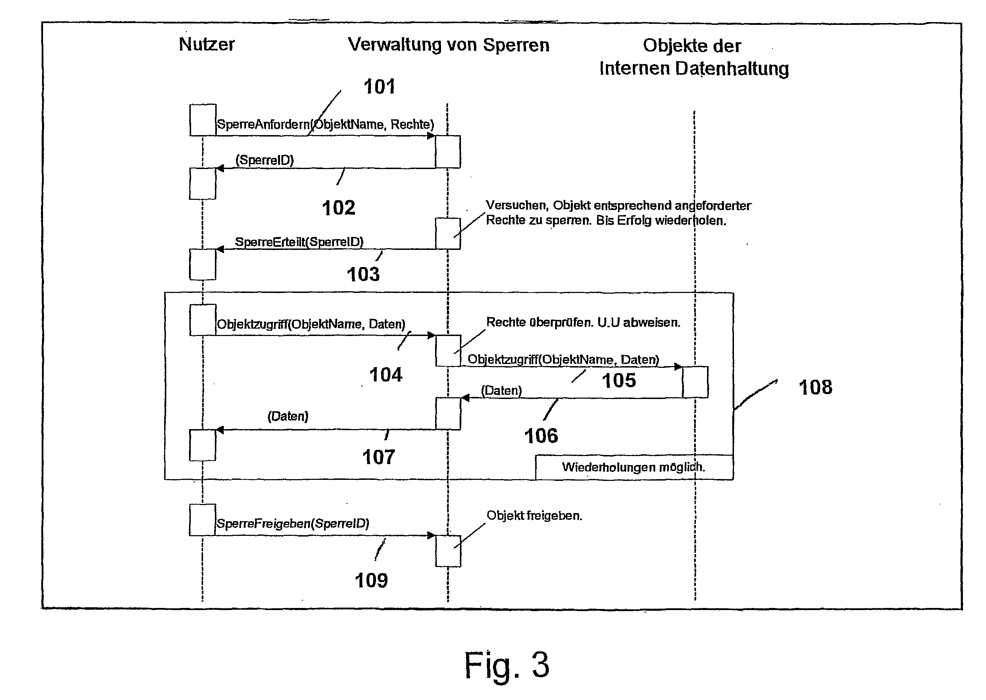

In Fig. 3 ist ein erstes Sequenzdiagramm dargestellt, das beispielhaft das Zusammenspiel eines Nutzers mit der Transaktions-Manager-Einrichtung 8 zeigt, wobei die Einheit 11 zur Verwaltung von Sperren verwendet wird. Die Verwaltung von Nutzern 10 ist nicht explizit dargestellt, die Verwaltung von Transaktionen 12 oder die Transaktions-Dienst-Entität 13 wird nicht verwendet.

In diesem Beispiel nach Fig. 3 wird von einem Nutzer entsprechend Schritt 101 eine Sperre auf ein Objekt der internen Datenhaltung 2 mit bestimmten Rechten angefordert. Dabei wird von dem Nutzer bzw. der Verwaltung von Nutzern der Objektname und die Art der Rechte an die Einheit zur Verwaltung von Sperren 11 geliefert. Beispielsweise greift ein externer Nutzer über die Mensch/Maschine-Schnittstelle 5 zu, wobei das Objekt die Einheit für Temperatur (Celsius, Kelvin) ist und die Sperre das Lesen und Schreiben.

Durch die Anforderung entsprechend Schritt 101 wird eine Sperre erzeugt und deren SperreID an den Nutzer entsprechend Schritt 102 zurückgegeben. In der Verwaltung von Sperren 11 wird versucht, das Objekt entsprechend angeforderter Rechte zu sperren und bis zum Erfolg wird dieser Vorgang wiederholt. Wenn das Objekt gesperrt werden konnte, was abhängig von Sperren für andere Nutzer einige Zeit in Anspruch nehmen kann, wird der Nutzer entsprechend Schritt 103 darüber informiert, d.h. es wird eine Bestätigung "Sperre" erteilt in Zusammenhang mit der SperreID an den Nutzer geliefert. Danach ist der Objektzugriff durch den Nutzer möglich und es wird der Objektname bzw. Daten an die Verwaltung von Sperren 11 entsprechend Schritt 104 geliefert, die die Rechte überprüft und bei Nichtübereinstimmung gegebenenfalls abweist. Anschließend wird der Objektzugriff entsprechend Schritt 105 an die interne Datenhaltung 2 weitergeleitet, die die Daten über Schritt 106 an die Verwaltung von Sperren 11 liefert, die wiederum die Daten weiter mit Schritt 107 an den Nutzer gibt. Der eigentliche Objektzugriff, der durch den Kasten 108 angegeben ist, kann mehrfach wiederholt werden. Nach Abschluß der Objektzugriffe gibt der Nutzer entsprechend Schritt 109 die Sperre frei.

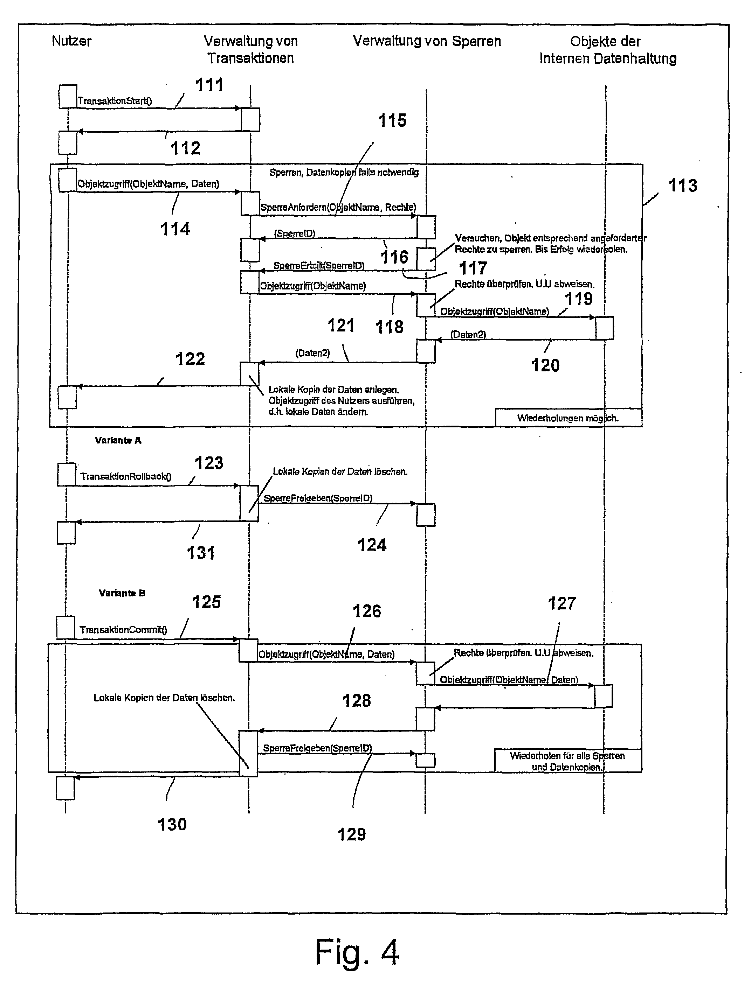

Ein weiteres Beispiel eines Sequenzdiagramms ist in Fig. 4 dargestellt, das beispielhaft das Zusammenspiel eines Nutzers mit der Transaktions-Manager-Einrichtung zeigt, wobei die Verwaltung von Transaktionen verwendet wird. Die Verwaltung von Nutzern ist nicht explizit dargestellt und die Verwaltung von Sperren wird nur intern genutzt, d.h. es wird der in Fig. 2 durch den Doppelpfeil 17 bezeichnete Weg zwischen der Einheit zur Verwaltung von Transaktionen 12 und der Einheit zur Verwaltung von Sperren 11 genutzt. Die Transaktions-Dienst-Entität 13 wird nicht verwendet. Bei dem vom Nutzer angeforderten Objektzugriff handelt es sich in diesem Beispiel um das Schreiben von Daten.

In diesem Beispiel wird von einem Nutzer eine Transaktion gestartet, was dem Schritt 111 zwischen Nutzer bzw. Nutzerverwaltung und der Verwaltung von Transaktionen entspricht. Schritt 112 stellt die Rückmeldung dar. Die in dem Kasten 113 dargestellten Schritte 115 bis 121 entsprechen im Wesentlichen den Schritten 101 bis 107 der Fig. 3, mit der Ausnahme, daß die Schritte von der Einheit zur Verwaltung von Transaktionen ausgehen und nicht vom Nutzer bzw. von der Nutzerverwaltung selbst. Schritt 114 stellt die Anforderung zum Objektzugriff zwischen Nutzer und Verwaltung von Transaktionen dar. Zusammenfassend kann gesagt werden, daß nach dem Start der Transaktion durch einen Nutzer dieser Objektzugriffe, nämlich Schreiben, wie in Fig. 4 dargestellt, durchführt, wobei das Lesen analog ist. Bei jedem Objektzugriff wird geprüft, ob das Anfordern von Sperren (115) notwendig ist und dies wird gegebenenfalls getan (117). Zusätzlich wird geprüft, ob das Anlegen von lokalen Datenkopien notwendig ist, z.B. wenn Daten potentiell geändert werden könnten. In dem Ausführungsbeispiel nach Fig. 4 wird in der Einheit zur Verwaltung von Transaktionen eine lokale Kopie der aus der internen Datenhaltung angeforderten Daten (121) angelegt. Weiterhin wird dort der Objektzugriff des Nutzers, d.h. das Schreiben bzw. das Ändern der lokalen Daten ausgeführt, und über Schritt 122 wird die Ausführung an den Nutzer gemeldet.

In der Variante A entscheidet der Nutzer, die Transaktion abzubrechen. Damit werden die lokalen Datenkopien gelöscht (123, 124), sowie alle Sperren freigegeben. Der Nutzer wird über den Erfolg informiert, daß seine Datenzugriffe verworfen worden sind (131).

Entsprechend der Variante B entscheidet der Nutzer die Transaktionen zu übergeben (Schritt 125). Damit werden die lokalen Datenkopien in der Einheit zur Verwaltung von Transaktionen über die Einheit zur Verwaltung von Sperren in die interne Datenhaltungs-Einrichtung 2 gespeichert (126, 127) und lokal gelöscht (128) sowie, entsprechend Schritt 129, alle Sperren freigegeben. Schritt 130 meldet die Aufhebung der Sperren an den Nutzer zurück.

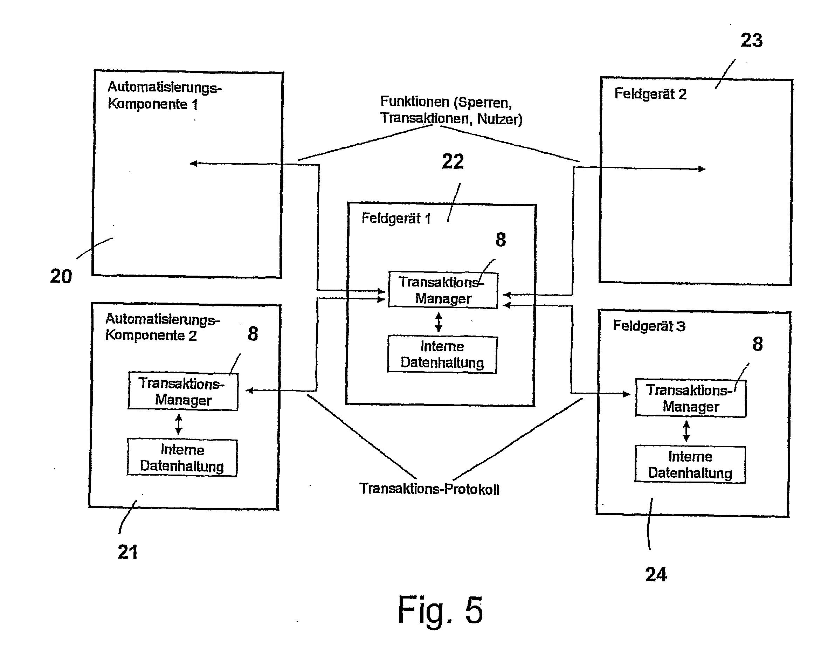

In Fig. 5 ist ein Beispiel eines Automatisierungssystems dargestellt, das aus zwei Automatisierungskomponenten 20, 21 und drei Feldgeräten 22, 23, 24 besteht, wobei eine Automatisierungskomponente eine Einrichtung ist, die die Daten und Funktionen von Feldgeräten nutzt, um ihr zugewiesene Aufgaben im Rahmen eines Automatisierungssystems zu erfüllen. Sie ist durch Hardware und Software realisiert.

Eine Automatisierungs-Komponente erfüllt Aufgaben wie Bedienung, Beobachtung, Regelung, Steuerung, Archivierung, Asset-Management und viele weitere. Ein typisches Beispiel ist ein PC oder Workstation basiertes Prozeßleitsystem in der Warte.

Eine Automatisierungs-Komponente ist über Kommunikationssysteme mit anderen Automatisierungs-Komponenten und Feldgeräten verbunden.

Dabei weisen die Automatisierungskomponente 21 und die Feldgeräte 22, 24 einen Transaktions-Manager 8 auf.

Die Automatisierungs-Komponente 20 nutzt die Funktionen des Transaktions-Managers 8 des Feldgerätes 22 (Sperren, Transaktionen, Nutzer). Die Automatisierungs-Komponente 21 nutzt das Transaktions-Protokoll, um ihren internen Transaktions-Manager 8 mit dem des Feldgerätes 22 zu synchronisieren (verteilte Transaktionen), wobei dazu das Transaktionsprotokoll auf das Kommunikationsprotokoll abgebildet wird.

Das Feldgerät 23 nutzt die Funktionen des Transaktions-Managers des Feldgerätes 22 (Sperren, Transaktionen, Nutzer). Das Feldgerät 24 nutzt das Transaktions-Protokoll um seinen internen Transaktions-Manager 8 mit dem des Feldgerätes 22 zu synchronisieren (verteilte Transaktionen).

Automatisierungskomponenten und Feldgeräte können in m:n Beziehungen zueinander stehen. Dabei können verschiedene Ausprägungen in einem Automatisierungssystem gemeinsam auftreten.

Durch die Einführung des Transaktions-Managers sowie des Transaktions-Protokolls in Feldgeräten lassen sich die Probleme lösen, die einführend beschrieben worden sind. Dabei werden u.a. folgende Fehlerursachen verhindert:
Zugriff auf Daten, die parallel geändert werden
Zugriff auf Daten, die nicht freigegeben sind
Zugriff auf Daten, die inkonsistent sind
Verlieren von Änderungen.

Weiterhin wird es ermöglicht:
konsistente Zustände sicherzustellen, bzw. zu diesen zurückzukehren
Konsistenz über das einzelne Feldgerät hinaus zu erzeugen.

## Patentansprüche

1. Feldgerät für Automatisierungssysteme mit einer Einrichtung zur internen Datenhaltung, Mitteln zur Erfassung von Prozeßgrößen und/oder Mitteln zur Ausgaben von Stellgrößen, Mitteln zur Signalverarbeitung abhängig von den erfaßten oder auszugebenden Stellgrößen und mindestens einer Kommunikationsschnittstelle, wobei die Mittel und die Kommunikationsschnittstelle mit einer Einrichtung zur internen Datenhaltung zum Austausch von Daten untereinander kommunizieren,
**dadurch gekennzeichnet,**
**daß** zur Steuerung des Zugriffs durch die Mittel (4, 5, 6) und durch die mindestens eine Kommunikationsschnittstelle (3) auf die Daten der Einrichtung zur internen Datenhaltung zwischen den Mitteln sowie der mindestens einen Kommunikationsschnittstelle und der Einrichtung zur internen Datenhaltung eine Transaktions-Manager-Einrichtung (8) vorgesehen ist, die Sperren, Transaktionen und/oder Nutzer verwaltet.

2. Feldgerät nach Anspruch 1, **dadurch gekennzeichnet, daß** die Transaktions-Manager-Einrichtung (8) eine Transaktions-Dienst-Entität (13) umfaßt, die mindestens ein Transaktionsprotokoll zur Koordination der Transaktionen mit anderen Transaktions-Manager-Einrichtungen zur Verfügung stellt.

3. Feldgerät nach Anspruch 2, **dadurch gekennzeichnet, daß** das Transaktionsprotokoll das Transaction Internet Protocol (TIP) ist.

4. Feldgerät nach Anspruch 2 oder Anspruch 3, **dadurch gekennzeichnet, daß** über das Transaktionsprotokoll der Transaktions-Dienst-Entität (13) die Propagierung von Transaktionen mit anderen Transaktions-Manager-Einrichtungen und verteilte Transaktionen realisierbar sind.

5. Feldgerät nach einem der Ansprüche 1 bis 4, **dadurch gekennzeichnet, daß** die Einheit (11) Verwaltung von Sperren, die Einheit (12) Verwaltung von Nutzern und/oder die Transaktions-Dienst-Entität (13) der Transaktions-Manager-Einrichtung (8) in Schichten übereinander liegen und die Einheit (10) Verwaltung von Nutzern vertikal angeordnet ist.

6. Feldgerät nach einem der Ansprüche 1 bis 5, **dadurch gekennzeichnet, daß** mindestens eine Schnittstelle (5) für eine manuelle Eingabe und/oder für die Ausgabe von Anzeigedaten vorgesehen ist.

7. Feldgerät nach einem der Ansprüche 1 bis 6, **dadurch gekennzeichnet, daß** die Transaktions-Manager-Einrichtung Mittel zur Sicherstellung von zumindest zweiphasigen Transaktionen aufweist.

8. Feldgerät nach einem der Ansprüche 2 bis 7, **dadurch gekennzeichnet, daß** das Transaktionsprotokoll auf andere Kommunikationsprotokolle abbildbar ist, die von der mindestens einen Kommunikationsschnittstelle (3) verwendet werden.

9. Feldgerät nach einem der Ansprüche 1 bis 8, **dadurch gekennzeichnet, daß** die Funktionen Verwalter von Sperren, Verwalter von Transaktionen und/oder Verwalter von Nutzern der mindestens einen Kommunikationsschnittstelle oder den Nutzern der mindestens einen Kommunikationsschnittstelle direkt oder über das Transaktionsprotokoll der Transaktions-Dienst-Entität (13) durch Abbildung auf das von der Schnittstelle verwendete Kommunikationsprotokoll zur Verfügung gestellt werden.

## Claims

1. Field device for automation systems, having a unit for internal data organisation, means for recording process parameters and/or means for outputting regulation parameters, means for processing signals according to the recorded regulation parameters or the regulation parameters to be output, and at least one communication interface, the means and the communication interface communicating with a unit for internal data organisation for the exchange of data between them, **characterised in that**, a transaction manager unit (8) is provided, which manages blockings, transactions and/or users, to control the access via the means (4, 5, 6) and by the at least one communication interface (3) to the data of the unit for internal data organisation between the means and the at least one communication interface and the unit for internal data organisation.

2. Field device according to claim 1, **characterised in that** the transaction manager unit (8) comprises a transaction service entity (13) which makes available at least one transaction protocol for coordinating the transactions with other transaction manager units.

3. Field device according to claim 2, **characterised in that** the transaction protocol is the Transaction Internet Protocol (TIP).

4. Field device according to claim 2 or claim 3, **characterised in that** the propagation of transactions with other transaction manager units and distributed transactions can be realised via the transaction protocol of the transaction service entity (13).

5. Field device according to one of claims 1 to 4, **characterised in that** the unit (11) management of blockings, the unit (12) management of users and/or the transaction service entity (13) of the transaction manager unit (8) lie in layers the one above the other and the unit (10) management of users is arranged vertically.

6. Field device according to one of claims 1 to 5, **characterised in that** at least one interface (5) is provided for manual input and/or for the output of display data.

7. Field device according to one of claims 1 to 6, **characterised in that** the transaction manager unit has means for ensuring at least two-phase transactions.

8. Field device according to one of claims 2 to 7, **characterised in that** the transaction protocol can be mapped onto other communication protocols which are used by the at least one communication interface (3).

9. Field device according to one of claims 1 to 8, **characterised in that** the functions manager of blockings, manager of transactions and/or manager of users are made available to the at least one communication interface or the users of the at least one communication interface directly or via the transaction protocol of the transaction service entity (13) by mapping onto the communication protocol used by the interface.

## Revendications

1. Appareil de terrain pour des systèmes d'automatisation, comportant un dispositif de stockage interne de données, des moyens permettant d'entrer des valeurs de processus et / ou des moyens permettant la sortie de variables, des moyens de traitement des signaux en fonction des variables entrées ou devant être délivrées et au moins une interface de communication, les moyens et l'interface de communication communiquant avec un dispositif de stockage interne des données pour échanger des données,
**caractérisé en ce que**, pour commander l'accès, par l'intermédiaire des moyens (4, 5, 6) et par l'intermédiaire de la au moins une interface de communication (3), aux données du dispositif de stockage interne des données, il est prévu, entre les moyens ainsi que la au moins une interface de communication et le dispositif de stockage interne des données, un dispositif de gestion des transactions (8), qui gère les blocages, transactions et / ou utilisateurs.

2. Appareil de terrain selon la revendication 1, **caractérisé en ce que** le dispositif de gestion des transactions (8) comporte une entité de services de transactions (13), qui offre au moins un protocole de transaction permettant de coordonner les transactions avec d'autres dispositifs de gestion des transactions.

3. Appareil de terrain selon la revendication 2, **caractérisé en ce que** le protocole de transaction est le Protocole de Transaction Internet (TIP).

4. Appareil de terrain selon l'une quelconque des revendications 2 ou 3, **caractérisé en ce que**, par l'intermédiaire du protocole de transaction de l'entité de services de transactions (13), la propagation des transactions avec d'autres dispositifs de gestion des transactions et des transactions partagées peuvent être mises en oeuvre.

5. Appareil de terrain selon l'une quelconque des revendications 1 à 4, **caractérisé en ce que** l'unité de gestion des blocages (11), l'unité de gestion des utilisateurs (12) et / ou l'entité de services de transactions (13) du dispositif de gestion des transactions (8) sont disposées en couches les unes au-dessus des autres, et l'unité de gestion des utilisateurs (10) est disposée verticalement.

6. Appareil de terrain selon l'une quelconque des revendications 1 à 5, **caractérisé en ce qu'**il est prévu au moins une interface (5) pour une saisie manuelle et / ou pour la sortie des données affichées.

7. Appareil de terrain selon l'une quelconque des revendications 1 à 6, **caractérisé en ce que** le dispositif de gestion des transactions présente des moyens permettant de garantir au moins des transactions en deux phases.

8. Appareil de terrain selon l'une quelconque des revendications 2 à 7, **caractérisé en ce que** le protocole de transaction peut être appliqué à d'autres protocoles de communication, qui sont utilisés par la au moins une interface de communication (3).

9. Appareil de terrain selon l'une quelconque des revendications 1 à 8, **caractérisé en ce qu'**il offre les fonctions de gestion des blocages, gestion des transactions et / ou gestion d'utilisateurs de la au moins une interface de communication ou des utilisateurs de la au moins une interface de communication directement, ou par l'intermédiaire du protocole de transaction de l'entité de services de transactions (13) en s'appliquant au protocole de communication utilisé par l'interface.
